# EUROPEAN PATENT APPLICATION

(11) **EP 4 379 074 A1**
(43) Date of publication of application: **05.06.2024**
(21) Application number: 22383179.3
(22) Date of filing: 02.12.2022
(51) Int. Cl.: C22B 3/42, C22B 15/00, C22B 30/02, C22B 30/04, C22B 30/06

(54) **RECOVERY OF ANTIMONY AND BISMUTH FROM ARSENIC-CONTAINING ACIDIC AQUEOUS SOLUTIONS**

(71) Applicant: Universitat Politècnica De Catalunya, 08034 Barcelona (ES); Consejo Superior de Investigaciones Científicas (CSIC), 28006 Madrid (ES)
(72) Inventor: CÓRDOBA SOLA, Patricia, 08034 Barcelona (ES); CORTINA PALLAS, José Luis, 08034 Barcelona (ES); LÓPEZ RODRÍGUEZ, Julio, 08034 Barcelona (ES); LUO, Da-Shuang, 08034 Barcelona (ES)
(74) Representative: Ungria López, Javier

(57) **Abstract**

The invention relates to a method for separating antimony and bismuth from an arsenic-containing acidic aqueous solution, wherein the initial pH of the acidic aqueous solution is equal to or less than -0.40, and wherein the method comprises the steps of (a) contacting the acidic aqueous solution comprising arsenic, antimony and bismuth with a reducing agent in a sufficient amount to reduce As(V) to As(lll) and to reduce Sb(V) to Sb(III); (b) contacting the reduced acidic aqueous solution of step (a) with a first alkaline reagent to raise the pH of the acidic aqueous solution to a value within the range of 0.5-1.5, wherein antimony precipitates, and wherein bismuth and arsenic remain in the acidic aqueous solution; (c) separating the antimony precipitate from the acidic aqueous solution comprising bismuth and arsenic; (d) contacting the acidic aqueous solution comprising bismuth and arsenic of step (c) with a second alkaline reagent to raise the pH of the acidic aqueous solution to a value within the range of 2.0-3.0, wherein bismuth precipitates, and wherein arsenic remains in the acidic aqueous solution; and (e) separating the bismuth precipitate from the acidic aqueous solution comprising arsenic.

## Description

### FIELD OF THE INVENTION

The present invention generally relates to the field of pyrometallurgy and hydrometallurgy industries. In particular, the present invention relates to methods for the recovery and valorisation of added-value impurity content from electrolytic solutions produced during copper refinery processes. More specifically, the invention focuses on the recovery of antimony and bismuth and the removal of arsenic from the effluents generated on the regeneration of the ion exchange resins, which are typically used to remove these impurities from the electrolytic solutions produced during the copper refinery processes. As a result, copper cathodes with higher purity may be produced.

### BACKGROUND ART

The importance of copper has led to a continuing search for more efficient production methods that are capable of yielding high purity copper. Methods of generating high purity copper include pyrometallurgical processing methods such as smelting methods. However, pyrometallurgical processing and purification of copper ores inevitably leads to a variety of impurities within the crude product due to inherent limitations of the processing methods. Therefore, the crude product must be subjected to further purification steps in order to remove the admixed impurities. That is, additional processes are necessary to bring the crude product to the desired purity standards.

Over seventy per cent of the copper metal produced comes from the smelting of copper sulphide concentrates. After copper is isolated from copper sulphide concentrates, it is deposited into copper anodes. These anodes contain a variety of metal impurities that are soluble in the molten copper. At this point, the copper is approximately 99% pure. However, for some industries, such as wire and electrical operations, the purity of the copper must be at least 99.99%. Moreover, aside from the overall purity of copper, some impurities in particular must be kept to a minimum. For example, bismuth present even in only at ppb level can make copper too brittle to pull wire. As with other metals, smelting alone is insufficient to generate high purity copper. Precious metals, nickel, lead, iron, selenium, tellurium, arsenic, antimony, tin, and bismuth are potentially found in this crude copper ("blister"), depending on the ore of origin, and thus further refining is required. The removal of impurities is critical in copper metallurgy for the production of high-quality copper, but it is also of great importance from an environmental point of view. Due to the constant increase in impurities in copper ore over the years, an even more critical situation can be reasonably expected in the future. It is foreseeable that in the near future, copper plants along the world will experience a significant increase in the content of impurities (mainly Sb and Bi) in the ores and concentrates processed. Thus, it is essential to keep impurities below the levels accepted by national and international standards for the copper industry and to decrease the total emission of harmful components.

Impurity removal in the copper smelting process is carried out through oxidation, followed by slagging and volatilisation during smelting, conversion and refining. A combination of intensive reactors, using oxygen or oxygen-enriched air as the blowing gas, has provided a number of improvements in copper smelter processes. However, the method of removing impurities has not changed in many years. Instead, it has become a serious limitation in the modern process of copper smelting and converting.

One of the most widely used alternative methods to increase copper purity is to remove impurities from the "blister" by electrolytic refining. In electrolytic refining, the blister is re-melted and poured into sheets. These sheets function as a copper anode in an electrolytic cell, which dissolves and eventually re-plates as a final copper cathodic product. The majority of impurities in the copper anode form an insoluble "slime" on the surface of the electrode or fall to the bottom of the cell. However, some impurities, in particular, antimony, bismuth and arsenic, dissolve into the acidic copper electrolyte and can be incorporated into the cathode by different mechanisms. If the electrolyte solution incorporating these impurities is not eliminated from the electrolytic refining circuit, these impurities will deteriorate the cathode quality resulting in concerns for negative downstream processing. Due to the significant economic impact of these electrolyte impurities, copper producers go to great lengths to mitigate any and all factors that negatively impact operating costs and/or the quality of the final product.

In order to assure the cathode quality, the electrolyte solution must be bled and treated. Among the variety of methods available for removal of antimony and bismuth, one option is the use of ion exchange columns. More specifically, one option is the use of a polishing stage including a pre-reduction of Fe(III) to Fe(ll) with metallic copper wirings and then a selective antimony and bismuth extraction from the sulphuric concentrated electrolyte by using chelating or material recognition technology ion exchange columns.

In these methods, metal, metalloid and non-metal impurities are selectively removed from the copper containing sulphuric electrolyte using ion-exchange resins. However, in a subsequent step the ion exchange resins have to be regenerated with a concentrated hydrochloric acid (HCI) solution. The hydrochloric acid solution thus generated is characterized by the presence of:
i) added-value elements such as antimony and bismuth (antimony is in the form of Sb (III) and Sb(V), wherein concentrations of 45% Sb(V) and 55% Sb(III) have been reported, and bismuth is in the form of Bi(IIII));
ii) toxic species of arsenic, mainly and As(V), although As(III) can also be detected (concentrations of 6% As(III) and 94% As (V) have been reported);
iii) sulphuric acid; and
iv) metallic traces such as iron, copper, nickel, calcium, magnesium and others.

Antimony, bismuth and arsenic in particular are of major interest. While antimony and bismuth are targets for their recovery and separation because of their intrinsic economic value due to their scarcity, arsenic is considered a toxic impurity affecting the quality of by-products and its safe separation from antimony and bismuth is desired, ideally as an environmentally stable species. In methods known in the art, the HCI eluate is typically limed and the sludge generated disposed as toxic waste. As an alternative, the HCI eluate is neutralised with CaO(s) or Ca(OH)₂ to collect Sb and Bi as the respective metal hydroxides and As is precipitated as calcium arsenates and arsenites. The neutralised sludge can be sold as a raw material for the production of electrical-quality bismuth.

However, there is still a need in the art to provide methods directed at the efficient treatment of the hydrochloric acid solution that is generated during the regeneration of the ion-exchange resins typically used in the electrolytic refining of copper, such that high value by-products can be recovered and toxic by-products can be safely removed.

### SUMMARY OF THE INVENTION

In the context of the above background, the instant technology aims to recover high value by-products and to safely remove toxic by-products from the hydrochloric acid solution that is generated during the regeneration of the ion-exchange resins typically used in the electrolytic refining of copper (Sole et al, Present and future applications of ion exchange in hydrometallurgy: An overview, Conference Paper, IEx 2016 - Hydrometallurgy Session; Ruiz I. et al., Pilot tests on Bismuth and Antimony removal from electrolyte at Atlantic Copper refinery, Proceedings of EMC 2013). More specifically, the inventors have identified that a step of contacting the antimony- and bismuth-loaded hydrochloric acidic solution with a reducing agent after elution of the ion exchange (IX) resin with hydrochloric acid and prior to treatment of the eluate with alkaline reagents, such that the arsenic and antimony redox state in the HCI eluate recovered from the IX column is properly controlled into the forms As(III) and Sb(III), is particularly efficient at precipitating antimony at pH values below 1.1 (where Bi and As remain in the acidic solution) and at precipitating bismuth at pH values around 2.2 (where the arsenic contaminant remains in the acidic aqueous medium). That is, antimony is precipitated at pH values below 1.1 while Bi and As remain in the acidic solution and, subsequently (after the antimony salt is separated from the solution), a fresh addition of alkali reagent up to pH values around 2.2 favours the precipitation of bismuth. Bismuth can then be filtered, such that the arsenic contaminant remains in the acidic aqueous solution. This procedure allows for efficient separation between valuable and toxic species.

Accordingly, in a first aspect, the invention relates to a method for separating antimony and bismuth from an arsenic-containing acidic aqueous solution, wherein the initial pH of the acidic aqueous solution is equal to or less than -0.40, and wherein the method comprises:
a) contacting the acidic aqueous solution comprising arsenic, antimony and bismuth with a reducing agent in a sufficient amount to reduce As(V) to As(III) and to reduce Sb(V) to Sb(III);
b) contacting the reduced acidic aqueous solution of step (a) with a first alkaline reagent to raise the pH of the acidic aqueous solution to a value within the range of 0.5-1.5, wherein antimony precipitates, and wherein bismuth and arsenic remain in the acidic aqueous solution;
c) separating the antimony precipitate from the acidic aqueous solution comprising bismuth and arsenic;
d) contacting the acidic aqueous solution comprising bismuth and arsenic of step (c) with a second alkaline reagent to raise the pH of the acidic aqueous solution to a value within the range of 2.0-3.0, wherein bismuth precipitates, and wherein arsenic remains in the acidic aqueous solution;
e) separating the bismuth precipitate from the acidic aqueous solution comprising arsenic.

### BRIEF DESCRIPTION OF THE FIGURES

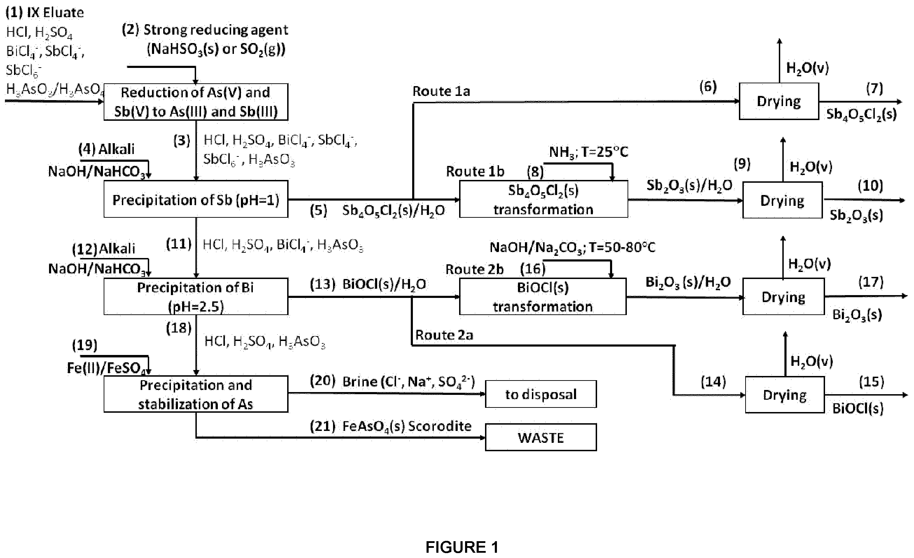

Figure 1 shows a schematic representation of an embodiment of the methods of the invention. In this diagram,
   - Item 1 represents the hydrochloric acid solution that is generated during the regeneration of the ion-exchange resins typically used in the electrolytic refining of copper;
   - Item 2 represents the reducing agent, capable of reducing As(V) to As(III) and Sb(V) to Sb(III);
   - Item 3 represents the reduced hydrochloric acid solution, wherein As(V) has been reduced to As(III) and wherein Sb(V) has been reduced to Sb(III);
   - Item 4 represents the first alkaline reagent;
   - Item 5 represents the stream of antimony precipitate (in the form of Sb₄O₅Cl₂(s)) after precipitating Sb(III) at a pH = 1;
   - Item 6 represents the step of drying the antimony precipitate in order to obtain antimony oxychloride Sb₄O₅Cl₂(s);
   - Item 7 represents the final antimony oxychloride Sb₄O₅Cl₂(s) product;
   - Item 8 represents the step of contacting the antimony oxychloride precipitate with NH₃, in order to obtain antimony trioxide Sb₂O₃(s);
   - Item 9 represents the step of drying the antimony trioxide Sb₂O₃(s);
   - Item 10 represents the final antimony trioxide Sb₂O₃(s) product;
   - Item 11 represents the antimony-depleted, bismuth-loaded and arsenic-loaded acidic aqueous solution;
   - Item 12 represents the second alkaline reagent;
   - Item 13 represents the stream of bismuth precipitate (in the form of BiOCI(s)) after precipitating Bi at a pH = 2.5;
   - Item 14 represents the step of drying the bismuth precipitate in order to obtain bismuth oxychloride BiOCI(s);
   - Item 15 represents the final bismuth oxychloride BiOCI(s) product;
   - Item 16 represents the step of contacting the bismuth oxychloride precipitate with alkaline reagent NaOH/ Na₂CO₃ at a temperature between 50-80°C, in order to obtain bismuth trioxide Bi₂O₃(s);
   - Item 17 represents the final bismuth trioxide Bi₂O₃(s) product;
   - Item 18 represents the antimony-depleted, bismuth-depleted and arsenic-loaded acidic aqueous solution;
   - Item 19 represents the ferric or ferrous salt;
   - Item 20 represents the brine mother liquid comprising Cl⁻, Na⁺ and SO₄²⁻ that results from a step of solid-liquid separation from the scorodite, wherein the brine mother liquid is sent for disposal (e.g., salinity removal).
   - Item 21 represents the scorodite precipitate FeAsO₄(s)▪2H₂O.
Figure 2 shows the variation of the logarithm values of the total molar concentration for the main elements from industrial eluate sample as a function of the pH along its treatment with 5 M NaOH.
Figure 3 shows (a) SEM image of the precipitates collected at pH -0.25 using the eluate from ion-exchange resins; (b) SEM image of the precipitates collected at pH 1 using the eluate from ion-exchange resins; and (c) SEM image of the precipitates collected at pH 2 using the eluate from ion-exchange resins.
Figure 4 shows the variation of the logarithm values of the total molar concentration for the main elements from synthetic solutions mimicking the AMPIX resin eluate composition containing As(V), Sb(III) and Bi(III).
Figure 5 shows (a) SEM-EDS results of the precipitates collected at pH 0.50 using the synthetic solution containing Sb(III), Bi(III) and As(V); and (b) SEM-EDS results of the precipitates collected at pH 2 using the synthetic solution containing Sb(III), Bi(III) and As(V).
Figure 6 shows the variation of the logarithm values of the total molar concentration for the main elements from synthetic solutions mimicking the AMPIX resin eluate composition containing As(III), Sb(III) and Bi(III).
Figure 7 shows (a) SEM-EDS results of the precipitates collected at pH 0.25 using the synthetic solution containing Sb(III), Bi(III) and As(III); and (b) SEM-EDS results of the precipitates collected at pH 2 using the synthetic solution containing Sb(III), Bi(III) and As(III).)
Figure 8 shows precipitation trends as a function of pH for an eluate pre-treated with SO₂(g) when adding a) 5M NaOH, b) CaCO₃(s), c) Na₂CO₃(s), d) NaHCO₃(s) as neutralizing agent.
Figure 9 shows SEM images of precipitates collected at pH (a) 0.00, (b) 0.20, (c) 1.00 and (d) 2.00, from a precipitation experiment using 5M NaOH.
Figure 10 shows (a) SEM-EDS results of the precipitates collected at pH 1.2 after pre-treating the eluate with SO₂(g) using CaCO₃; and (b) SEM-EDS results of the precipitates collected at pH 2.5 after pre-treating the eluate with SO₂(g) using CaCO₃.
Figure 11 shows (a) SEM-EDS results of the precipitates collected at pH 1.2 after pre-treating the eluate with SO₂(g) using Na₂CO₃; and (b) SEM-EDS results of the precipitates collected at pH 2.5 after pre-treating the eluate with SO₂(g) using Na₂CO₃-
Figure 12 shows (a) SEM-EDS results of the precipitates collected at pH 1.2 after pre-treating the eluate with SO₂(g) using NaHCO₃; and (b) SEM-EDS results of the precipitates collected at pH 2.5 after pre-treating the eluate with SO₂(g) using NaHCO₃.
Figure 13 shows (a) SEM-EDS results of the precipitates collected at pH 1.2 after pre-treating the eluate with NaHSO₃(s) using NaOH; and (b) SEM-EDS results of the precipitates collected at pH 2.5 after pre-treating the eluate with NaHSO₃(s) using NaOH.
Figure 14 shows SEM-EDS results of the solids collected in conversion of Sb₄O₅Cl₂.
Figure 15 shows SEM-EDS results of the solids collected in conversion of BiOCI.

### DETAILED DESCRIPTION OF THE INVENTION

As explained above, the instant technology aims to recover high value by-products and to safely remove toxic by-products from the hydrochloric acid solution that is generated during the regeneration of the ion-exchange resins typically used in the electrolytic refining of copper. This particular invention relates to the recovery of antimony and bismuth and to the safe removal of arsenic from said hydrochloric acid solution that is generated during the regeneration of the ion-exchange resins typically used in the electrolytic refining of copper.

### Methods of the invention

In a first aspect, the invention relates to a method for separating antimony and bismuth from an arsenic-containing acidic aqueous solution, wherein the initial pH of the acidic aqueous solution is equal to or less than -0.40, and wherein the method comprises:
a) contacting the acidic aqueous solution comprising arsenic, antimony and bismuth with a reducing agent in a sufficient amount to reduce As(V) to As(III) and to reduce Sb(V) to Sb(III);
b) contacting the reduced acidic aqueous solution of step (a) with a first alkaline reagent to raise the pH of the acidic aqueous solution to a value within the range of 0.5-1.5, wherein antimony precipitates, and wherein bismuth and arsenic remain in the acidic aqueous solution;
c) separating the antimony precipitate from the acidic aqueous solution comprising bismuth and arsenic;
d) contacting the acidic aqueous solution comprising bismuth and arsenic of step (c) with a first alkaline reagent to raise the pH of the acidic aqueous solution to a value within the range of 2.0-3.0, wherein bismuth precipitates, and wherein arsenic remains in the acidic aqueous solution;
e) separating the bismuth precipitate from the acidic aqueous solution comprising arsenic.

The initial pH of the acidic aqueous solution is equal to or less than -0.40. In particular embodiments of the invention, the acidic aqueous solution is selected from the group consisting of a hydrochloric acid solution, a sulphuric acid solution or combinations thereof. An initial pH value of a hydrochloric acid aqueous solution equal to or less than -0.40 corresponds to a hydrochloric acid concentration in the aqueous solution of at least 1M hydrochloric acid (HCI). An initial pH value of a sulphuric acid aqueous solution equal to or less than -0.40 corresponds to a sulphuric acid concentration in the aqueous solution of at least 3.5M sulphuric acid (H₂SO₄). The correlative values of pH and concentration are estimated as described elsewhere (Darrell Kirk Nordstrom, Charles N. Alpers, Carol J. Ptacek, and David W. Blowes, "Negative pH and Extremely Acidic Mine Waters from Iron Mountain, California", Environmental Science & Technology 2000 34 (2), 254-258). Thus, in particular embodiments, the acidic aqueous solution is a hydrochloric acid solution and the concentration of the hydrochloric acid solution is of at least 1M, such as for example between 1M and 7M, between 2M and 7M, between 3M and 7M, between 4M and 7M, or between 5M and 7M. In particular embodiments of the invention, the concentration of the hydrochloric acid solution is 2.5M, 3M, 4M, 5M, 6M or 7M. In other particular embodiments, the acidic aqueous solution is a sulphuric acid solution and the concentration of the sulphuric acid solution is of at least 3.5M, such as for example between 3.5M and 7M, between 4M and 7M, or between 5M and 7M. In particular embodiments of the invention, the concentration of the sulphuric acid solution is 2.5M, 3M, 4M, 5M, 6M or 7M. In yet other particular embodiments, the acidic aqueous solution is a combination of hydrochloric acid and sulphuric acid.

In a particular embodiment, the hydrochloric acid solution is a hydrochloric acid solution that is generated during the regeneration of the ion-exchange (IX) resins used in the electrolytic refining of copper. Said hydrochloric acid solution thus generated carries valuable and/or toxic metal, metalloid and non-metal impurities. In a particular embodiment, the hydrochloric acid solution produced during the regeneration of the ion-exchange resins used in the polishing stage is a bleed stream of a hydrochloric solution with valuable impurities, which is bled from other refinery process containing also valuable impurities. As used herein, the term "valuable impurities" refers to metals (e.g. Bi) and/or metalloids (e.g. Sb) that can be present in the hydrochloric acid solution produced in the regeneration of the ion-exchange resins during the polishing stage of the electrolyte refinery ion-exchange column, and which may have strategic and/or added value. As used herein, the term "toxic impurities" refers to toxic and undesired metals, metalloids and/or non-metals that can be present in the hydrochloric acid solution produced in the regeneration of the ion-exchange resins during the polishing stage of the electrolyte refinery ion-exchange column, and which may involve toxicity concerns (i.e., an environmental concern) that reduce the quality of any recovered valuable elements and which needs to be separated and disposed of as an environmentally inert species following robust stabilisation processes.

In the instant invention, the major impurities are antimony, bismuth and arsenic, although other impurities at lower contents could be found in the hydrochloric acid solution that is generated during the regeneration of the ion-exchange resins used in the electrolytic refining of copper (e.g. calcium, copper, sodium, aluminium, nickel, indium, magnesium, vanadium, iron, zinc, silver, chromium, molybdenum, manganese, cobalt, lead, lithium). In particular, the hydrochloric acid solution that is generated during the regeneration of the ion-exchange resins used in the electrolytic refining of copper may contain impurities at lower concentrations than antimony, bismuth and arsenic. The minor contaminants and their concentrations may be Ca (5-300 mg/L), Cu (30-250 mg/L), Na (10-90 mg/L), Al (40-110 mg/L), Ni (5-30 mg/L) and In (5-50mg/L). For instance, the minor contaminants and their concentrations may be Ca (300 mg/L), Cu (250 mg/L), Na (90 mg/L), Al (110 mg/L), Ni (18 mg/L) and In (38 mg/L). Other metals (Mg, V, Fe, Zn and Ag, Cr, In, Mo, In, Ba, Mn, Co, Pb) may be present at concentrations under 5 mg/L. The rest of the metals in the periodic table may be present at concentrations in the order of µg/L. Thus, the method of the invention also allows for the separation of antimony and bismuth from other contaminants such as calcium and copper. In particular embodiments, the methods of the invention allow for the retrieval of antimony salts that are 70%, 75%, 80%, 85%, 90%, or 95% pure. In particular embodiments, the methods of the invention allow for the retrieval of bismuth salts that are 70%, 75%, 80%, 85%, 90%, or 95% pure.

In particular embodiments of the invention, the method allows for the extraction into the antimony(III) rich mineral phase at least 90%, at least 95%, at least 96%, at least 97%, at least 98%, at least 99%, at least 99.1%, at least 99.2%, at least 99.3%, at least 99.4%, or at least 99.5% of the initial concentration of antimony in the acidic aqueous medium. In particular embodiments of the invention, the method allows for the extraction into the bismuth(III) rich mineral phase of at least 90%, at least 95%, at least 96%, at least 97%, at least 98%, at least 99%, at least 99.1%, at least 99.2%, at least 99.3%, at least 99.4%, or at least 99.5% of the initial concentration of bismuth in the acidic aqueous medium. In particular embodiments of the invention, the method allows for the co-extraction into the antimony (III) or the bismuth (III) rich mineral phase of less 2%, less than 1%, less than 0.5%, less than 0.2%, less than 0.1% or less than 0.05% of the initial concentration of arsenic in the acidic aqueous medium.

In the context of the instant invention, the term "reducing agent" (which can also be called reductant, reducer, or electron donor) refers to a chemical species that donates an electron to an electron recipient (which can also be called oxidizing agent, oxidant, oxidiser, or electron acceptor). As a result of this exchange, the oxidation state of the reducer increases while the oxidation state of the oxidiser decreases. The oxidation state describes the degree of loss of electrons. In particular embodiments of the invention, the reducing agent comprises:
- Fe(s)
- Cu(s)
- a sulphur-based compound selected from the group consisting of NaSH, NaHSO₃(s), SO₂(g) and combinations thereof, and/or
- a phosphorus based compound selected from the group consisting of NaH₂PO₂(s), Na₂HPO₂(s), KH₂PO₂(S) and combinations thereof,
preferably wherein the reducing agent is selected from the group consisting of Fe(s), Cu(s), NaHPO₂, NaHSO₃(s), SO₂(g) and combinations thereof.

Mixing of the acidic aqueous solution with the reducing agent can be achieved via any method that is known in the state of the art. In one or more embodiments, mixing the acidic aqueous solution comprising valuable and/or toxic impurities with the reducing agent, in gas or in solid form, comprises mixing in tank to provide a homogeneous solution. In the context of the instant invention, the reducing agent is provided in a sufficient amount to reduce As(V) to As(III) and Sb(V) to Sb(III). That is, the redox states of antimony and arsenic are adjusted to the trivalent forms by using the reducing agent. In particular embodiments of the invention, the redox potential of the solution should be controlled to values below 380 mV. The redox potential value of the treated effluent depends on the concentration of the species that control said value, primarily As(V) and Sb(V). In the range of concentrations expected for the ion-exchange eluate, wherein As concentration is in the range 0.5 to 2.5 g/L and wherein Sb concentration is in the range 4 to 11 g/L, redox potential values below 380 mV assure the total reduction (e.g. >99%) of As(V) to As(III) and Sb(V) to As(III). If the redox potential threshold values are not attained, the separation process cannot be effectively achieved since As and Sb will precipitate forming arsenic and antimony mineral phases such as SbAsO4(s). In particular embodiments of the invention, at least 0.12 mol NaHSO₃, at least 0.15 mol NaHSO₃, at least 0.20 mol NaHSO₃, or at least 0.25 mol NaHSO₃ per litre eluate are a sufficient amount to reduce As(V) to As(III) and Sb(V) to Sb(III). When using SO₂(g) as the reducing agent instead, mole consumption should be equivalent to that of NaHSO₃.

In the context of the instant invention, the pH of the acidic aqueous solution comprising arsenic, antimony and bismuth is raised to a value within the range of 0.5-1.5 in step (b) of the method of the invention by means of a first alkaline reagent, in order to obtain an antimony precipitate. In the context of the instant invention, the pH of the antimony-depleted acidic aqueous solution comprising arsenic and bismuth is raised to a value within the range of 2.0-3.0 in step (d) of the method of the invention by means of a second alkaline reagent, in order to obtain an antimony precipitate. In particular embodiments of the invention, the first and/or second alkaline reagent independently comprises:
- a sodium salt selected from the group consisting of NaOH, NaHCO₃, Na₂CO₃ and combinations thereof;
- a potassium salt selected from the group consisting of KOH, KHCO₃, K₂CO₃ and combinations thereof;
- a magnesium salt selected from the group consisting of MgO, Mg(OH)₂ and combinations thereof; and/or
- a calcium salt selected from the group consisting of CaO, Ca(OH)₂ and combinations thereof.

In particular embodiments of the invention, the first and/or second alkaline reagent is independently selected from the group consisting of NaOH, NaHCO₃, KOH, Ca(OH)₂, Mg(OH)₂, and combinations thereof. The first alkaline reagent used in step (b) of the method of the invention may or may not be the same as the second alkaline reagent used in step (d) of the method of the invention. That is, the first alkaline reagent used in step (b) may be the same as the second alkaline reagent used in step (d), or they may be different.

Mixing of the acidic aqueous solution with the alkaline reagent (in solid or in liquid form) can be achieved via any method known in the art. In one or more embodiments, mixing the acidic aqueous solution comprising valuable and/or toxic impurities with the alkaline reagent (in solid or in liquid form) comprises mixing in tank to provide a homogeneous solution.

The antimony precipitate obtained during step (b) of the method of the invention and the bismuth precipitate obtained during step (d) of the method of the invention may be separated from the acidic aqueous solution comprising bismuth and arsenic by methods that are well known in the art. In particular embodiments, the antimony and/or bismuth precipitates are separated from the acidic aqueous solution by filtration methods.

In particular embodiments of the invention, the method further comprises, after step (c), an additional step (c1) of drying the antimony precipitate in order to obtain antimony oxychloride Sb₄O₅Cl₂(s). The solid is washed with water and ethanol, and then dried in an oven at 110°C. In the alternative, in particular embodiments of the invention, the method further comprises, after step (c), an additional step (c2) of contacting the antimony precipitate with a third alkaline reagent, followed by a step of drying in order to obtain antimony trioxide Sb₂O₃(s). The solid is washed with water and ethanol, and then dried in an oven at 110°C.

Similarly, in particular embodiments of the invention, the method further comprises, after step (e), an additional step (e1) of drying the bismuth precipitate in order to obtain bismuth oxychloride/ bismoclite BiOCI(s). The solid is washed with water and ethanol, and then dried in an oven at 110°C. In the alternative, in particular embodiments of the invention, the method further comprises, after step (e), an additional step (e2) of contacting the antimony precipitate with a fourth alkaline reagent at a temperature between 50-80°C, followed by a step of drying in order to obtain bismuth oxide Bi₂O₃(s). The solid is washed with water and ethanol, and then dried in an oven at 110°C.

In embodiments of the invention, the third and/or fourth alkaline reagent is independently selected from the group consisting of:
- a solution of NaOH/ Na₂CO₃;
- a solution of NaOH/Na₂CO₃/NaHCO₃;
- a solution of KOH/K₂CO₃/KHCO₃;
- a solution of ammonia (NH₃); and
- combinations thereof.

The concentration of the third alkaline reagent is provided in step (c2) in amounts sufficient to achieve a transformation of at least 70%, at least 80%, at least 90%, at least 95%, at least 98%, at least 99%, at least 99,9% or 100% by weight of the antimony oxychloride Sb₄O₅Cl₂(s) into antimony trioxide Sb₂O₃(s). The concentration of the fourth alkaline reagent is provided in step (e2) in amounts sufficient to achieve a transformation of at least 70%, at least 80%, at least 90%, at least 95%, at least 98%, at least 99%, at least 99,9% or 100% by weight of the bismuth oxychloride/ bismoclite BiOCI(s) into bismuth oxide Bi₂O₃(s). In particular embodiments of the invention, the concentration of NH₃ is of at least 1M NH₃ (c.a. 2% wt NH₃), at least 5% wt NH₃, at least 10% wt NH₃, at least 15% wt NH₃, at least 20% wt NH₃, at least 25% wt NH₃, or at least 30% wt NH₃. In particular embodiments of the invention, the concentration of NaOH is of at least 100 g/L NaOH, of at least 120 g/L NaOH or at least 160 g/L NaOH or at least 200 g/L. In particular embodiments of the invention, the concentration of NaOH is of at least 1M, of at least 2.5M, of at least 3M, of at least 4M or of at least 5M. In particular embodiments of the invention, the concentration of Na₂CO₃ is of at least 0.5M. In particular embodiments of the invention, the concentration of NaHCO₃ is of at least 0.5M. In particular embodiments of the invention, the concentration of KOH is of at least 1M. In particular embodiments of the invention, the concentration of KHCO₃ is of at least 0.5M. In particular embodiments of the invention, the concentration of K₂CO₃ is of at least 0.1M.

The method of the invention may further comprise a step of treating the acidic aqueous solution, which has been depleted of the valuable impurities antimony and bismuth but which retains the toxic arsenic impurity in the acidic aqueous medium, with a ferric and/or a ferrous salt to precipitate an environmentally safe, geochemically stable mineral (i.e., scorodite). Thus, in a particular embodiment of the invention, the method further comprises, after step (e), an additional step (f1) of contacting the acidic aqueous solution comprising arsenic with a ferric or ferrous salt in order to precipitate scorodite FeAsO₄▪2H₂O(s). Optionally, this step (f1) may be followed by an additional step (f2) of solid-liquid separation, wherein the scorodite of step (f1) is separated from the brine mother liquor containing mainly Cl⁻, Na⁺ and SO₄²⁻ for its final treatment as a residual stream. In a particular embodiment, the ferric or ferrous salt is selected from the group consisting of ferric chloride, ferrous sulphate and combinations thereof. In general, Fe(lll) is typically needed in the precipitation of scorodite, wherein the most common solution is the use of a ferric salt (e.g., ferric chloride). However, there is the possibility of using an iron salt Fe(II) (e.g., ferrous sulphate) under conditions suitable to oxidize the Fe(II) to Fe(lll) (e.g., under oxygen) and produce Fe(lll) *in-situ.* The use of ferrous sulphate is usually cheaper than ferric chloride.

The methods described herein present several advantages over methods known in the prior state of the art. For example, the methods of the invention are compatible with a configuration that provide for a continuous process in a copper refinery plant. Known processes that use ion exchange (IX) resins cannot be carried out continuously, as the resins need to be regenerated after certain periods of use. These methods can be implemented in a plant that is operated in a "worker"/ "polisher" configuration with two IX columns connected in series. The electrolyte is loaded into the top of the first column (called "worker") where it passes through the resin bed, and then from the bottom of this column it is transferred to the top of the second column (called "polisher"). When the resin of the first column is exhausted, the second column becomes the new "worker" column while the first column is being regenerated. When the regeneration step is completed, the first column again becomes the "polisher" column until the second column is exhausted. This cycle repeats continuously. Another benefit is that electro-refineries can obtain high purity bismuth and antimony salts and a geochemically stable arsenic mineral form using much faster methods that use lower amounts of reagents than previously known methods (e.g., precipitation).

As a result of the methods and related aspects of the invention, the major non-metallic impurities present in the hydrochloric acid solution that is generated during the regeneration of the ion-exchange resins typically used in the electrolytic refining of copper may be treated. In particular, toxic by-product arsenic may be safely disposed of in the form of scorodite, whereas high-value by-products antimony and bismuth may be effectively recovered as BiOCI(s) and Bi₂O₃(s), and SbOCI(s), Sb₄O₅Cl₂(s) and Sb₂O₃(s), respectively. The formation of the chloride and non-containing chloride by-products will depend if chloride ions are present in the alkaline solution used for being precipitated. Additionally, the chloride forms could be converted into the oxide forms after treatment of the solid with an alkaline solution at temperatures of 50-80°C.

All the terms and embodiments described herein are equally applicable to all of the aspects of the invention. It should be noted that, as used in the specification and in the appended claims, the singular forms "a", "an", and "the" include their plural referents unless the context clearly indicates otherwise. Similarly, the term "comprises" (or "comprising") as used herein also describes "consists of" (or "consisting of) in accordance with generally accepted patent practice.

### EXAMPLES

The following invention is hereby described by way of the following examples, which are to be construed as merely illustrative and not limitative of the scope of the invention.

### Example 1: Acidic eluate from IX resins as a source of valuable impurities

Refinery electrolyte is generated in a copper refinery by bringing in cast copper anodes (not shown) containing valuable and/or toxic impurities (i.e., metals, metalloids and/or non-metals) that must be removed to produce high-grade copper. The copper anode is electroplated onto the cathode through a sulphuric acid electrolyte solution. As the anode is dissolved into the electrolyte, the valuable impurities in the anode are liberated. Soluble species remain in the electrolyte, whereas insoluble species form a sludge at the bottom of the electro-refining cell. A bleed stream of the electrolyte solution with valuable impurities is taken at regular intervals from the electro-refining cell. The electrolyte with valuable impurities is the bleed stream of the refinery electrolyte to be treated for recovery of valuable and/or toxic impurities, by means of an ion exchange (IX) column. The IX resin in the column is then regenerated by elution with hydrochloric acid (HCI).

The experimental work in respect of the instant invention was carried out with the hydrochloric acid (HCI) eluate used in the regeneration of the IX resin, provided by Atlantic Copper (Huelva, Spain). The chemical composition of the eluate generated from the Atlantic Copper is summarised in Table 1 below. Values show a large variation since they depend on the operation of the polishing stage and on the operation of the regeneration stage, which in turn depend on the resin life in terms of sorption and desorption cycles.

**Table 1 Concentration of major and minor components in the eluate generated from the Atlantic Copper Huelva refinery**

| **Composition, mg/L** | | | | | | | | |
|---|---|---|---|---|---|---|---|---|
| **pH** | **SO₄** | **Cl** | **Ca** | **Fe** | **Cu** | **As** | **Sb** | **Bi** |
| n.d. | n.d. | 63000 | n.d. | 6 | 348 | 1386 | 637 | 2429 |
| n.d. | n.d. | 190500 | n.d. | 17 | 200 | 2254 | 6848 | 5143 |
| n.d. | n.d. | 107120 | n.d. | 3 | 70 | 2254 | 7944 | 8388 |
| -0.43 | 8240.00 | 115510 | n.d. | n.d. | n.d. | 3940 | 2790 | 3260 |
| -0.58 | 7304.25 | 94385 | 256 | 2 | 272 | 1030 | 5455 | 8257 |
| -0.47 | 16699.29 | 64359 | n.d. | n.d. | n.d. | 3617 | 1501 | 2273 |
| -0.53 | 7757.60 | n.d. | 248 | n.d. | 255 | 1008 | 5278 | 8461 |

| | | | | | | | | |
|---|---|---|---|---|---|---|---|---|
| n.d. not determined | | | | | | | | |

### Example 2: Treatment of acidic eluate from ion-exchange resins

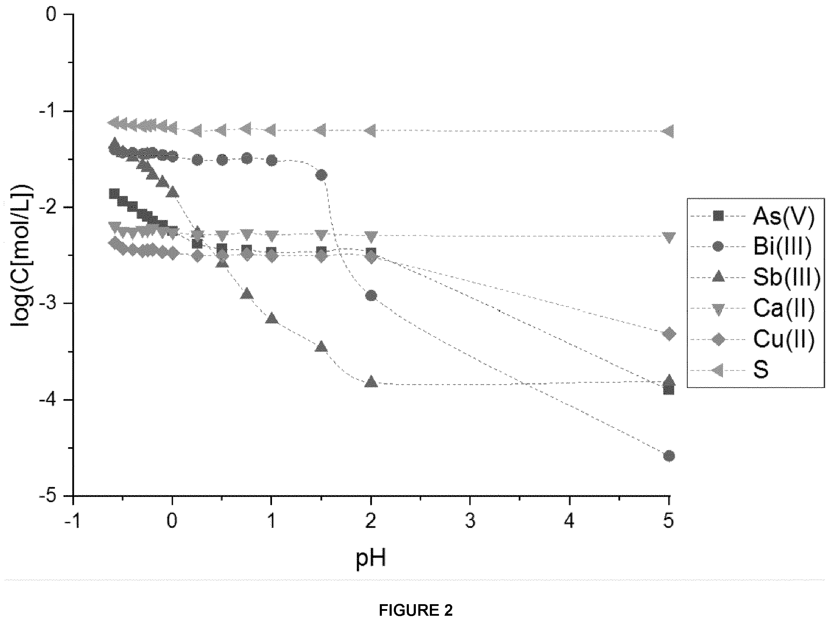

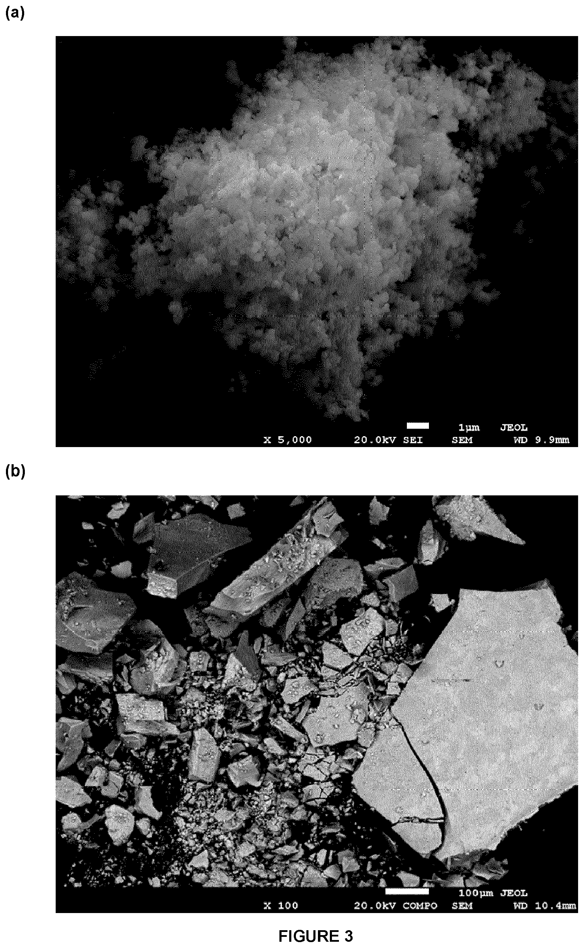

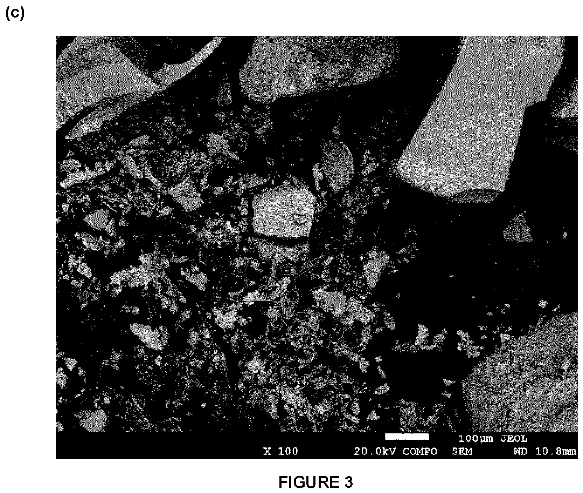

Experimental results of precipitation experiments following treatment of the IX resin eluate with NaOH are shown in Figure 2. Precipitation experiments were carried out in separate assays of 250 mL of IX resin hydrochloric acid eluate, sequentially adding appropriate amounts of alkali until the pH reaches selected pH values. That is, each solution is sequentially brought to the different pH values, wherein liquid samples were taken or solid samples were filtered, as appropriate. The precipitation at different pH values of species of interest can be summarised as follows:
- pH = -0.25. The concentration of Sb(III) and As(V) started decreasing at pH above -0.5. At pH values of around -0.25, the molar ratio between these species (As/Sb) is 0.8, which suggests the formation of a mineral phase containing both of said elements in the precipitate. Analysis by FSEM-EDAX (Figure 3(a)) show crystals with a particle size distribution between 50 to 150 nm, that are rich on Sb, O, As (c.a. 92% content). XRD analysis identified mixtures of two minerals after heating the sample to 654°C: antimony arsenic oxide (SbAsO₅(s)) and antimony oxide (Sb₆O₁₃(s)).
- pH = 1.0. At pH values of around 1, more than 99% of the As(V) has precipitated as SbAsO₄(s), and the total Sb concentration decreases to a minimum value of log[Sb]= -3.3, which implies a precipitation ratio higher than 99.9%. Analysis by FSEM-EDAX (Figure 3(b)) show crystals with a particle size distribution between 60 to 220 nm, that are mainly composed by Sb (37% content) and 27% of Bi(III).XRD analysis only detects the presence of bismoclite (BiOCI(s)).
- pH = 2.0. At pH values of around 2, Bi(III) concentration decreases to a minimum value of log[Bi(III)] of -3.0, meaning that the removal ratio of Bi(III) was higher than 98%. Analysis by FSEM-EDAX (Figure 3(c)) show large crystals with a particle size distribution >2 µm, that are rich in Bi, O, Cl (>95% content) containing 1.5% of Sb. XRD analysis identifies bismoclite (BiOCI(s)).

Selective recovery of Sb(III) and Bi(III) by precipitation should avoid the formation of SbAsO₄(s) and BiAsO₄(s) as their formation occurs at similar pH values where Sb(III) and Bi(III) oxides or hydroxi-chlorides precipitate.

### Example 3: Treatment of a synthetic solution containing Sb(III), Bi(III) and As(V)

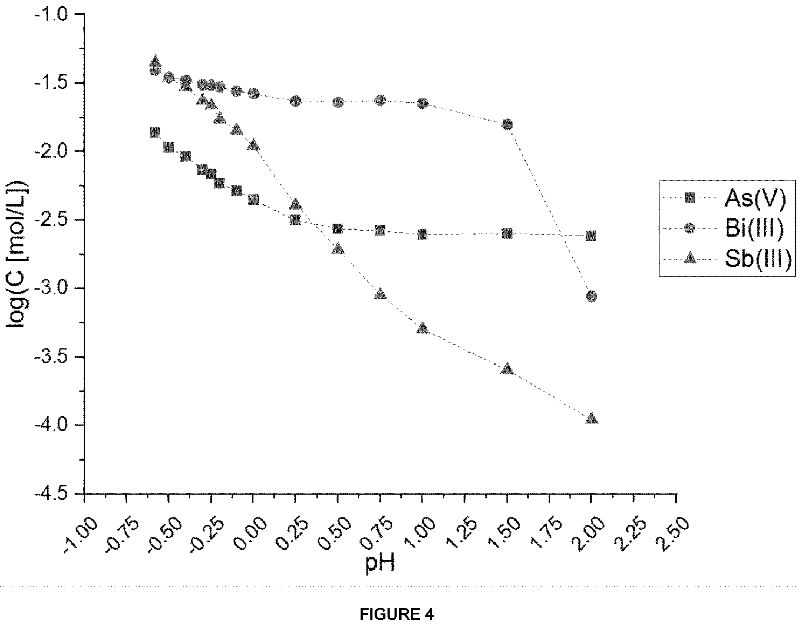

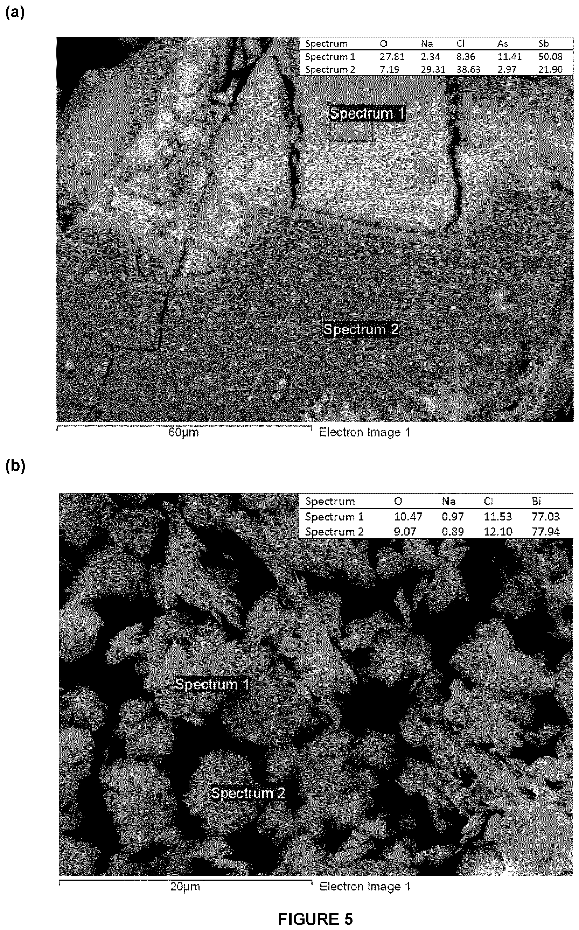

The above results obtained for the IX eluate are replicated using synthetic solutions which contain Sb(III), Bi(III) and As(V) in hydrochloric acid (HCI) at the concentration levels of the real eluate. Experimental results of precipitation experiments following treatment of the synthetic solution with NaOH are shown in Figure 4.
- pH = -0.45. The results obtained using this synthetic solution show that Sb(III) and As(V) concentrations start decreasing at pH values above -0.45. It can also be observed that, with increasing pH values, the molar ratio As/Sb remains fairly constant (As/Sb ration of 1), indicating the formation of a mineral phase containing both elements.
- pH = 0.25. With the increase of the pH at 0.25, where more than 99% of the As(V) has precipitated as SbAsO₄(s), Sb(III) concentration reaches a value of log[Sb]=-2.7, which implies a precipitation ratio higher than 99.9%.
- pH = 0.5. A precipitate was collected at pH 0.5, and analysis by FSEM-EDAX (Figure 5(a)) show crystals with a particle size distribution between 20 to 100 nm that are rich in Sb, O, As (>85% content). Despite its high precipitation rate, As(V) was not detected by XRD. Only antimony oxide chloride (Sb₄O₅Cl₂/ Sb₂O₃•2SbOCl) was identified by XRD.
- pH = 2.0. A further increase of pH to values of 2 decreases Bi(III) concentration to a minimum value of log[Bi(III)] = -3, where the Bi(III) removal ratio is higher than 99%. Analysis by FSEM-EDAX (Figure 5(b)) show large crystal with a particle size distribution >1 µm, that are rich in Bi, O, Cl (>99% content) and 1% of Sb and As. Bismoclite (BiOCI(s)) can be identified by XRD analysis.

This synthetic solution reproduces the co-precipitation issues observed for the IX hydrochloric acid eluate. Thus, selective recovery of Sb(III) and Bi(III) by precipitation should avoid the formation of SbAsO₄(s) and BiAsO₄(s) as their formation occurs at similar pH values where Sb(III) and Bi(III) oxides or hydroxi-chlorides precipitate.

### Example 4: Treatment of a synthetic solution containing Sb(III), Bi(1I1) and As(III)

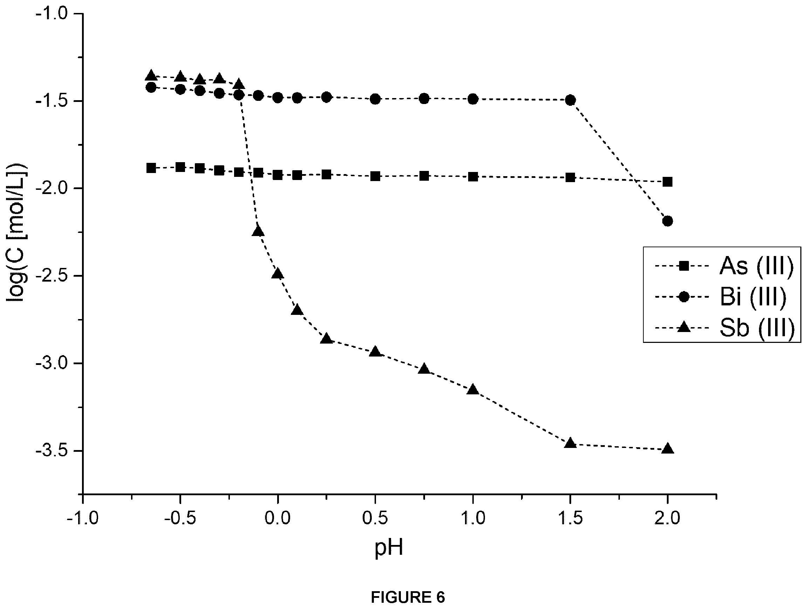

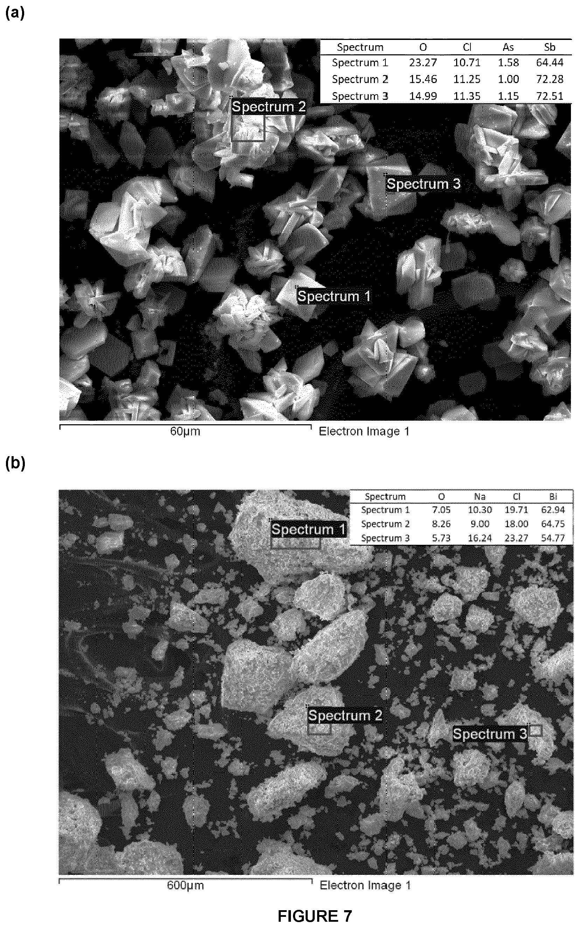

In view of the above, the synthetic solution was modified, and a new synthetic solution for further experimentation contains Sb(III), Bi(III) and As(III) in hydrochloric acid (HCI) at the concentration levels of the real IX hydrochloric acid eluate. Experimental results of precipitation experiments following treatment of the new synthetic solution with NaOH are shown in Figure 6.
- pH = -0.2. The precipitation results using the new synthetic solutions show that concentrations of Sb(III) start decreasing at pH values above -0.2.
- pH = 0.25. With the increase of the pH at 0.25, Sb(III) concentration decreases, reaching a value of log[Sb]=-2.86, which implies a precipitation ratio higher than 96%. A precipitate was collected at pH 0.25, and analysis by FSEM-EDAX (Figure 7(a)) show crystals with a particle size distribution between 20 to 100 nm that are rich in Sb, O, Cl (>98% content). The precipitate was identified as antimony oxide chloride (Sb₄O₅Cl₂/ Sb₂O₃•2SbOCl) by XRD.
- pH = 1.5. Concentrations of Bi(III) started decreasing at pH above 1.5.
- pH = 2.0. A further increase of pH to values of 2.0 shows that Bi(III) concentration decreases to a minimum value of log[Bi(III)] = -2.18, and a removal ratio higher than 80%. Analysis by FSEM-EDAX (Figure 7(b)) show large crystals with a particle size distribution >1 µm, that are rich in Bi, O, Cl (>85% content) and 11% of Na. XRD analysis identifies bismoclite (BiOCI(s)).
- It can be also observed that, with increasing pH values, the concentration of As remains constant along the pH range evaluated (pH -0.70 - pH 2.0), indicating As(III) hardly precipitates with increasing pH.

The use of the reduced form of arsenic (As(III)) in the synthetic solution instead of As(V) appears to reduce the co-precipitation issues observed for the IX hydrochloric acid eluate, wherein SbAsO₄(s) and BiAsO₄(s) precipitate at similar pH values where Sb(III) and Bi(III) oxides or hydroxi-chlorides precipitate.

### Example 5: Treatment of the eluate from ion-exchange resins after being pre-treated with SO₂(g)

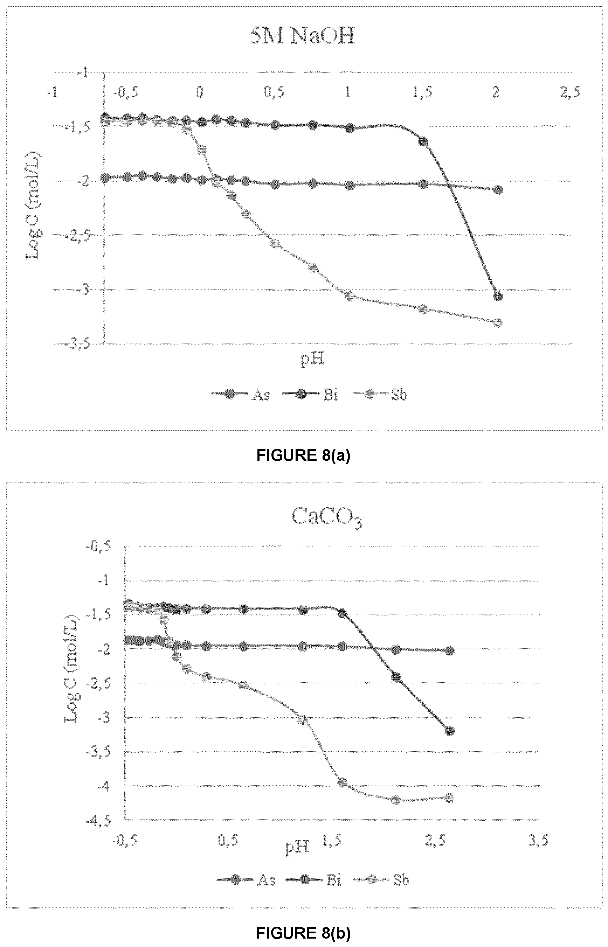

Experimental results of precipitation experiments following treatment of the IX resin eluate with NaOH are shown in Figures 8(a)-8(d), wherein the IX resin eluate was previously treated with a reducing agent, such that the As(V) can be effectively converted into As(III). Thus, prior to the precipitation treatment with NaOH, SO₂(g) was continuously fed into 700 mL of IX resin hydrochloric acid eluate at 25±0.5 °C. Both pH and redox potential of the solution were continuously measured. During the experiment, the solution was continuously stirred. When the redox potential of the solution no longer changed with the introduction of SO₂(g), at a value of approximately 390mV after treatment with SO₂(g) or NaHSO₃(s), the flow was stopped, and the solution was stored at 4°C for further precipitation experiments.

The precipitation experiments were carried out in separate assays of 250 mL of reduced eluate adding the appropriate amount of alkaline reagent until a maximum pH value of 2.5 is reached. This value, according to previous studies and modelling efforts, ensures a quantitative removal of Sb(III) and Bi(III) >99% from solution and minimum removal (<0.2%) of As and other metals present in the eluate (Ca, Cu, Fe, Al).

In one of the simplest iterations of the experimental design, an alkaline reagent was added to the reduced IX resin hydrochloric acid eluate until the pH value of the solution was 1.2. The solution was then vacuumed filtered to obtain a precipitate, which was dried in an oven at 60 °C for 24 hours to obtain Sb₄O₅Cl₂(s). Alkaline reagent was again added to the clear solution obtained after vacuum filtration, until the pH value was 2.5. The solution was then filtered under vacuum to obtain a precipitate, which was placed in an oven at 60 °C to dry for 24 hours to obtain BiOCI(s).

The alkaline reagents tested were: (a) a 5M solution of NaOH; (b) CaCO₃(s); (c) Na₂CO₃(s); and (d) NaHCO₃(s).

### (a) 5M NaOH

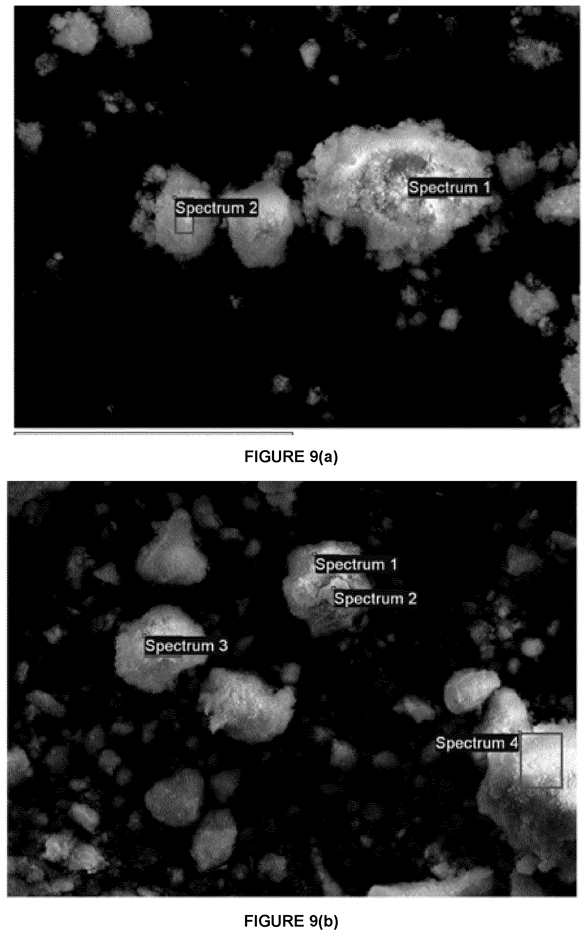

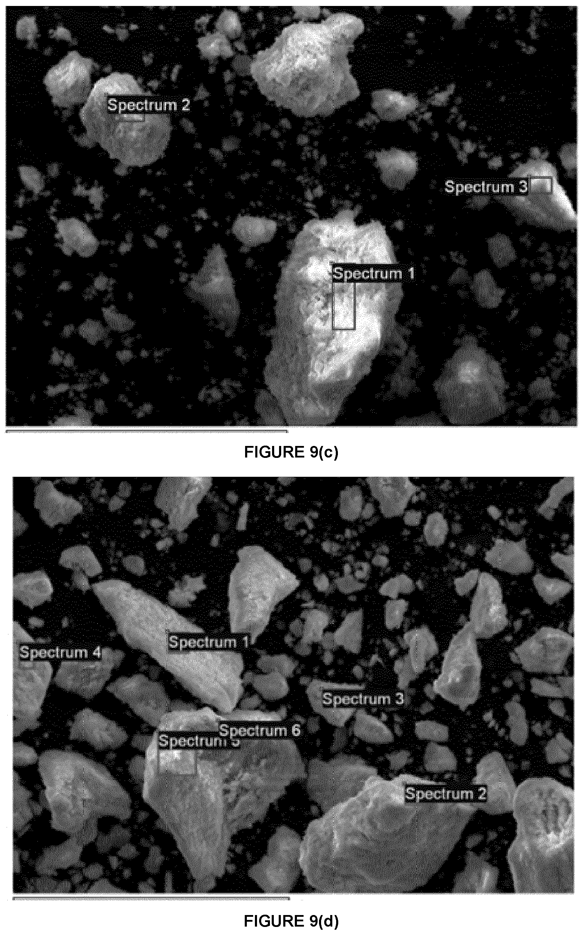

Precipitation experiments were carried out using 5M NaOH as an alkaline reagent to be added to the reduced IX resin hydrochloric acid eluate. The evolution of the concentration of the elements in solution is depicted in Figure 8(a). It can be observed that, in this experiment, the concentration of As remained constant along the pH range evaluated (-0.70 - 2.0). Additionally, it can be observed that the separation of Sb from Bi can be feasible, as Sb precipitated from pH -0.2 to pH 1.0 (log[Sb] from -1.46 to - 3.06, >95%), while Bi started to precipitate at pH values of 1.0-1.5 (log[Bi]=-1.51) and it was mostly removed at pH 2.0 (log[Bi]= -3.05, >97%). Analysis by FSEM-EDAX show that the precipitates collected presented a morphology that is completely different from the morphology observed under experimental conditions that did not include reduction of As(V) to As(III) by means of a reducing agent. In this case, a solid SbAsO₄(s) precipitate was not observed. Instead, some irregular crystals were obtained at pH 0.00 (Figure 9(a)), pH 0.20 (Figure 9(b)), pH 1.00 (Figure 9(c)), and pH 2.00 (Figure (d)). Table 2 below shows the semi-quantitative composition of the solids collected.

**Table 2. Semi-quantitative composition in % (weight) of the precipitates at pH 0.00, 0.20, 1.00 and 2.00**

| **pH** | **Spectrum** | **O** | **Na** | **Cl** | **As** | **Sb** | **Bi** |
|---|---|---|---|---|---|---|---|
| 0.00 | 1 | 18.25 | 2.06 | 15.45 | 0.71 | 59.97 | 3.57 |
| | 2 | 23.27 | - | 9.41 | 0.69 | 64.89 | 1.75 |
| 0.20 | 1 | 22.28 | 1.04 | 9.66 | 0.67 | 60.50 | 5.87 |
| | 2 | 21.71 | - | 9.11 | 0.93 | 58.67 | 9.58 |
| | 3 | 24.06 | - | 8.74 | 1.01 | 62.17 | 4.01 |
| | 4 | 23.48 | - | 8.73 | 1.09 | 62.80 | 3.90 |
| 1.00 | 1 | 16.70 | 2.30 | 11.29 | 0.62 | 39.06 | 30.02 |
| | 2 | 17.34 | 3.16 | 11.23 | 0.84 | 37.66 | 29.77 |
| | 3 | 15.32 | 1.65 | 10.59 | 0.58 | 40.00 | 31.87 |
| 2.00 | 1 | 13.40 | 0.68 | 11.40 | 0.77 | 0.78 | 72.96 |
| | 2 | 14.02 | 1.37 | 12.08 | 0.91 | 1.05 | 70.59 |
| | 3 | 15.96 | 0.98 | 12.24 | 0.63 | 1.65 | 68.54 |
| | 4 | 15.41 | 0.97 | 10.79 | 0.51 | 1.26 | 71.07 |
| | 5 | 8.45 | 20.34 | 33.17 | 0.45 | 0.42 | 37.16 |
| | 6 | 11.94 | 9.97 | 18.06 | 0.13 | 0.43 | 59.48 |

It can be observed that precipitates at pH 0.00 and 0.20 are rich in Sb, which is expected to precipitate as SbOCI(s) (93-98%). Other elements such as Bi and Na were present at low concentrations, while the concentration of As remained below 1.25%. Solids collected at pH 1.00 were found to be a mixture of both SbOCI(s) and BiOCI(s), presenting low content of As (<0.85%). Finally, the precipitate at pH 2.00 was mainly BiOCI(s) (>95%), with a low presence of Na, Sb and As.

### (b) CaCO₃(s)

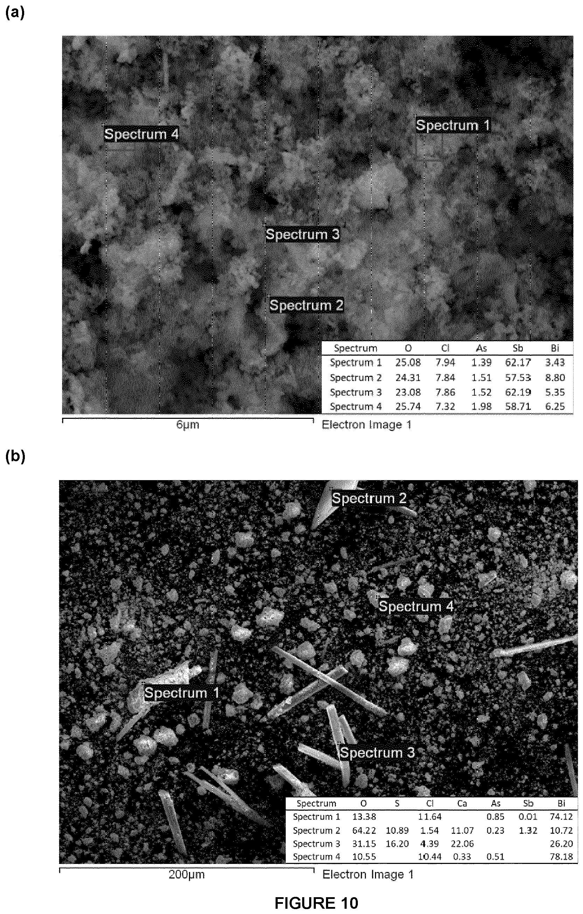

Figure 8(b) shows that the separation of Sb from Bi is also feasible using CaCO₃(s) as the alkaline reagent, since Sb precipitates from pH -0.2 to pH 1.2 (log[Sb] from -1.42 to -3.02, >97%), while Bi started to precipitate at pH values of 1.2-1.5 (log[Bi] = -1.42) and was almost entirely removed at pH 2.5 (log[Bi]= -3.19, >98%). At the same time, the concentration of As remained constant along the pH range evaluated (log[As] = -2). Analysis by FSEM-EDAX (Figure 10(a)) of precipitate samples collected at pH values of 1.2 show large crystals with a particle size distribution >1 µm, which presented low amounts of As (<2.0%) and Bi (<10.0%) and a high concentration of Sb (~60%). At pH 2.5, the samples presented low amounts of As (<1.0%) and Sb (<1.5%) with high concentrations of Bi (-70%) (Figure 10(b)).

### (c) Na₂CO₃(S)

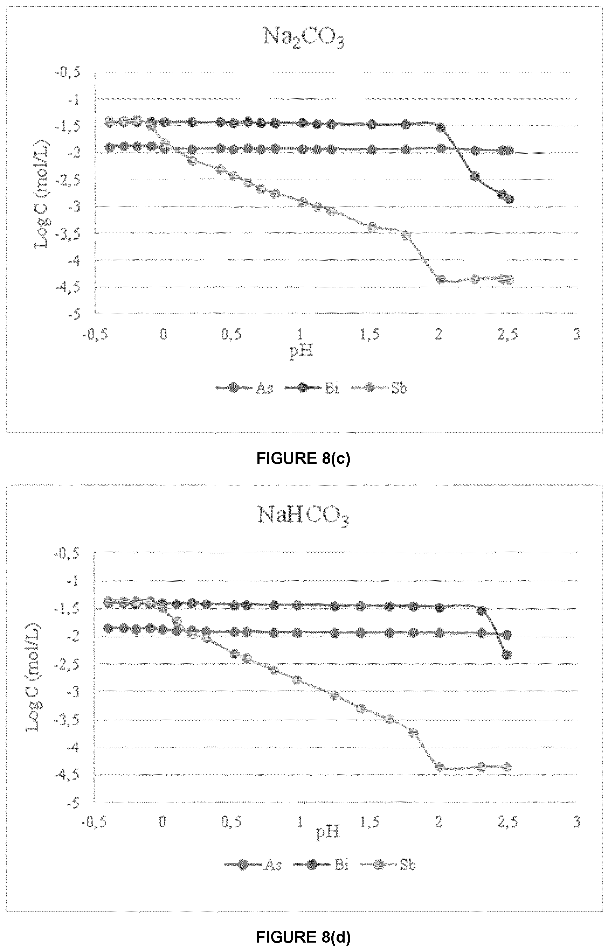

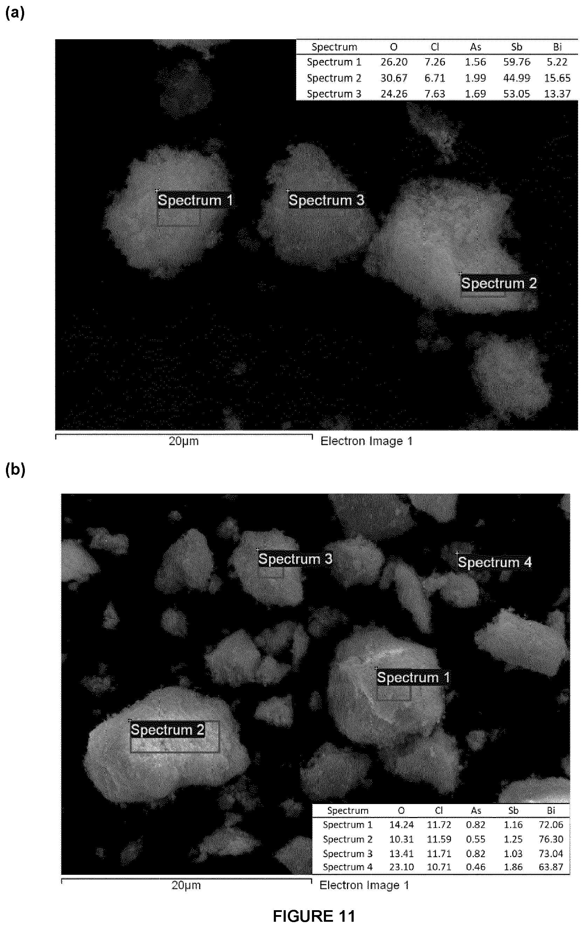

Figure 8(c) shows that the separation of Sb from Bi is also feasible using Na₂CO₃(s) as the alkaline reagent. Under these experimental conditions, the concentration of As in solution remained constant along the pH range evaluated, whereas Sb precipitated from pH -0.2 to 1.2 (log[Sb] from -1.38 to -3.08, >97%). Analysis of the precipitate by FSEM-EDAX (Figure 11(a)) show large crystals with a particle size distribution of around 20 µm, wherein the particles present low amounts of As (<2.0%) and Bi (<16.0%), but high concentrations of Sb (~50%). On the other hand, Bi started to precipitate at pH 2 (log[Bi]=-1.51) and it was almost entirely removed at pH 2.5 (log[Bi]= -2.85, >96%). Analysis of the precipitate at pH 2.5 by FSEM-EDAX (Figure 11(b)) indicated low amounts of As (<1.0%) and Sb (<2.0%) with high concentrations of Bi (~70%). XRD analysis identified bismoclite (BiOCI(s)).

### (d) NaHCO₃(s)

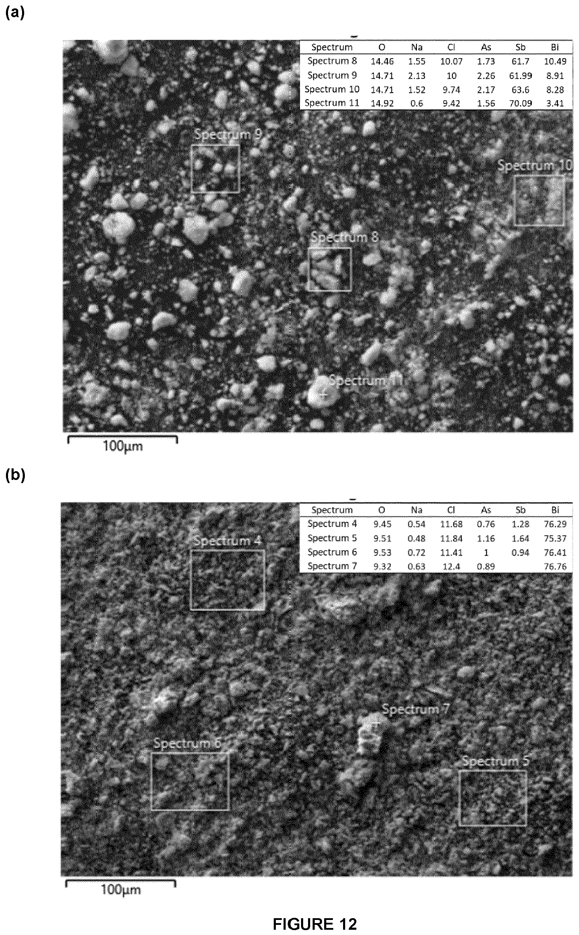

Figure 8(d) shows that the separation of Sb from Bi is also feasible using NaHCO₃(s) as the alkaline reagent, wherein the separation profile of Sb and Bi using NaHCO₃(s) as neutralizing agent is very similar as the precipitation profile using Na₂CO₃(s). In this case, Sb precipitated from pH 0 to 1.2 (log[Sb] from -1.51 to -3.06, >97%). Analysis of the precipitate by FSEM-EDAX (Figure 12(a)) show large crystals with a particle size distribution of around 100 µm, which present low amounts of As (<3.0%) and Bi (<10.0%), but high concentrations of Sb (~60%). On the other hand, Bi started to precipitate at pH 2.0 (log[Bi]=-1.47) and it was almost entirely removed at pH 2.5 (log[Bi]= -2.32, >87%), At the same time, the concentration of As remained constant along the pH range evaluated. Analysis of the precipitate at pH 2.5 by FSEM-EDAX (Figure 12(b)) presented low amounts of As (<1.5%) and Sb (<2.0%), but high concentrations of Bi (~75%). XRD analysis identified bismoclite (BiOCI(s)).

### Example 6: Treatment of the eluate from ion-exchange resins after being pre-treated with NaHSO₃(s)

Alternative reducing agents were also tested. 800 mL of IX resin hydrochloric acid eluate were taken into a beaker, and an appropriate amount of NaHSO₃ (s) was added little by little in a controlled manner, wherein both pH and redox potential of the solution were continuously measured. During the experiment, the solution was continuously stirred. Addition of NaHSO₃ (s) was stopped when the redox potential of the solution no longer decreased upon fresh addition of the reducing agent. The solution at 4 °C was stored for further precipitation experiments.

As in the previous case with SO₂(g), the precipitation experiments were carried out in separate assays of 200 mL of reduced IX resin hydrochloric acid eluate adding the appropriate amount of an alkaline reagent until the pH reached a value of 2.5.

In one of the simplest iterations of the experimental design, 5M NaOH was added until the pH value of the solution was 1.2, and the solution was vacuum filtered to obtain a precipitate, which was then dried in an oven at 60 °C for 24 hours to obtain Sb₄O₅Cl₂. A clear solution was obtained after vacuum filtration, and the alkaline reagent was added until the pH value was 2.5, then the solution was filtered under vacuum to obtain a precipitate, which was placed in an oven at 60 °C to dry for 24 hours to obtain BiOCI.

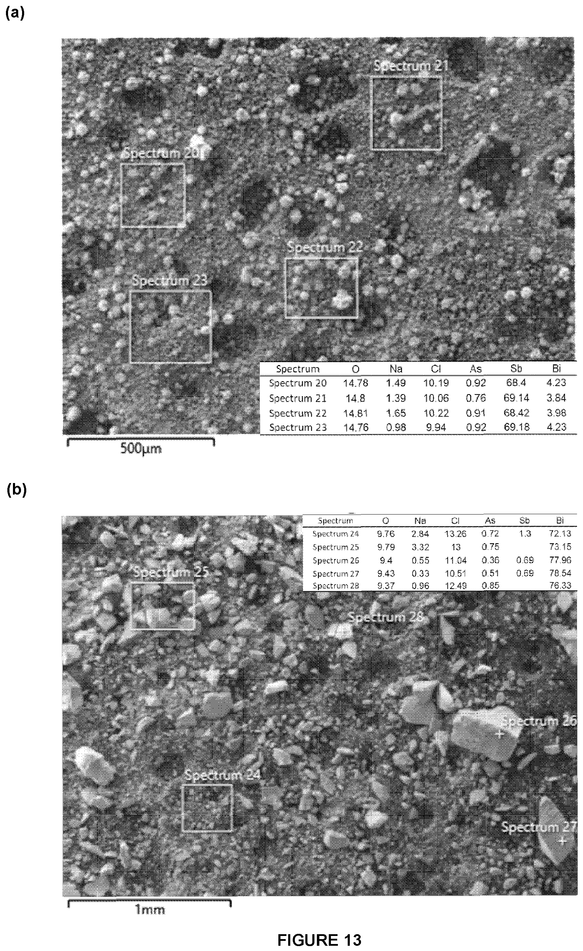

The results of this precipitation experiment show that the concentration of As remained constant along the pH range evaluated, after pre-treating the eluate with solid NaHSO₃. Additionally, it can be observed that the separation of Sb from Bi is feasible, since Sb precipitated in the pH range from pH -0.45 to pH 1.0 (log[Sb] from -1.51 to -3.32, >98%). Analysis of the precipitate by FSEM-EDAX (Figure 13(a)) show large crystals with a particle size distribution of around 500 µm, wherein the precipitate presented low amounts of As (<1.0%) and Bi (<5.0%), but high concentrations of Sb (~70%). On the other hand, Bi started to precipitate at pH 1.2 (log[Bi]= -1.43) and it was mostly removed at pH 2.5 (log[Bi]= -3.54, >99%). Analysis of the precipitate at pH 2.5 by FSEM-EDAX (Figure 13(b)) presented low amounts of As (<1.0%) and Sb (<1.0%), but high concentrations of Bi (~75%). XRD analysis identified bismoclite (BiOCI(s)).

### Example 7: Conversion of solids into a commercially suitable form

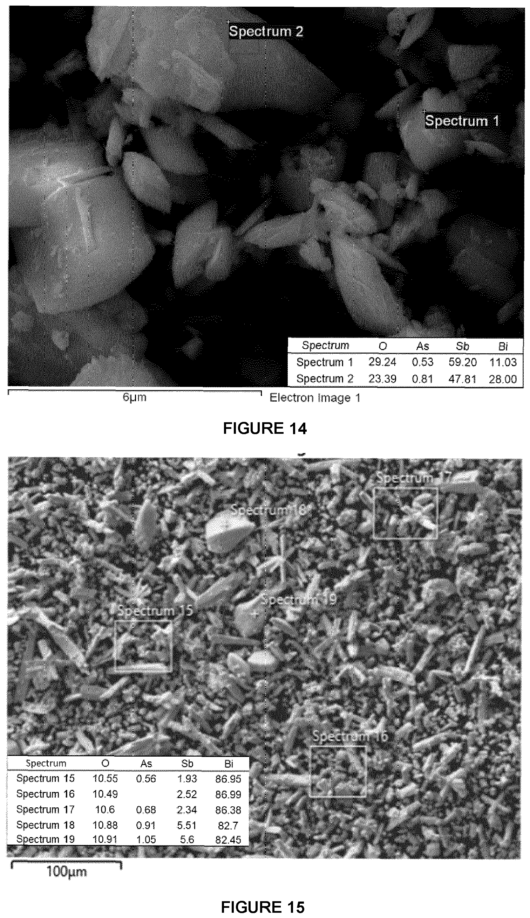

A Sb₄O₅Cl₂ precipitate was obtained after reduced IX resin hydrochloric acid eluate was treated with 5M NaOH at a pH value of 1.2. Subsequently, 1.017g of the Sb₄O₅Cl₂ sample was weighed and mixed with 10 mL of 1M NH₃(aq), and then the mixture was stirred for 6 h. After that, the solution was filtered to obtain a liquid filtrate and a solid precipitate:
- The solid precipitate was placed in an oven at 60 °C for 24 hours, in order to obtain Sb₂O₃ (s). Analysis by FSEM-EDAX (Figure 14) showed large crystals with a particle size distribution >1 µm. The precipitate presented low amounts of As (<1.0%) and Bi (<30.0%), but high concentrations of Sb (~50%). XRD analysis identified Sb₂O₃(s).
- The liquid filtrate was treated with 5M NaOH at a pH value of 2.5 in order to obtain a BiOCI solid precipitate. 2.312g of the BiOCI solid precipitate were mixed with 40mL of 100g/L NaOH at 75°C and stirred for 2h. Following the filtration of the solution, the precipitate was placed in an oven at 60 °C to dry for 24 hours to obtain Bi₂O₃. Analysis by FSEM-EDAX (Figure 15) presented low amounts of As (<1.0%) and Sb (<6.0%), but high concentrations of Bi (~85%). XRD analysis identified Bi₂O₃(s).

## Claims

1. A method for separating antimony and bismuth from an arsenic-containing acidic aqueous solution, wherein the initial pH of the acidic aqueous solution is equal to or less than -0.40, and wherein the method comprises:
a) contacting the acidic aqueous solution comprising arsenic, antimony and bismuth with a reducing agent in a sufficient amount to reduce As(V) to As(III) and to reduce Sb(V) to Sb(III);
b) contacting the reduced acidic aqueous solution of step (a) with a first alkaline reagent to raise the pH of the acidic aqueous solution to a value within the range of 0.5-1.5, wherein antimony precipitates, and wherein bismuth and arsenic remain in the acidic aqueous solution;
c) separating the antimony precipitate from the acidic aqueous solution comprising bismuth and arsenic;
d) contacting the acidic aqueous solution comprising bismuth and arsenic of step (c) with a second alkaline reagent to raise the pH of the acidic aqueous solution to a value within the range of 2.0-3.0, wherein bismuth precipitates, and wherein arsenic remains in the acidic aqueous solution;
e) separating the bismuth precipitate from the acidic aqueous solution comprising arsenic.

2. The method according to claim 1, wherein the acidic aqueous solution is a hydrochloric acid solution, and wherein the concentration of the hydrochloric acid solution is between 1M and 7M, preferably wherein the hydrochloric acid solution is a hydrochloric acid solution that is generated during the regeneration of an ion-exchange resin used in the electrolytic refining of copper.

3. The method according to any one of claims 1 or 2, wherein the reducing agent comprises:
- Fe(s)
- Cu(s)
- a sulphur based compound selected from the group consisting of NaSH, NaHSO₃(s), SO₂(g) and combinations thereof, and/or
- a phosphorus based compound selected from the group consisting of NaH₂PO₂(s), Na₂HPO₂(s), KH₂PO₂(s) and combinations thereof,
preferably wherein the reducing agent is selected from the group consisting of Fe(s), Cu(s), NaHPO₂, NaHSO₃(s), SO₂(g) and combinations thereof.

4. The method according to any one of claims 1 to 3, wherein the wherein the first and or second alkaline reagent independently comprises
- a sodium salt selected from the group consisting of NaOH, NaHCO₃, Na₂CO₃ and combinations thereof;
- a potassium salt selected from the group consisting of KOH, KHCO₃, K₂CO₃ and combinations thereof;
- a magnesium salt selected from the group consisting of MgO, Mg(OH)₂ and combinations thereof; and/or
- a calcium salt selected from the group consisting of CaO, Ca(OH)₂ and combinations thereof,
preferably wherein the alkaline reagent is selected from the group consisting of NaOH, NaHCO₃, KOH, Ca(OH)₂, Mg(OH)₂, and combinations thereof.

5. The method according to any one of claims 1 to 4, further comprising, after step (c):
- an additional step (c1) of drying the antimony precipitate in order to obtain antimony oxychloride Sb₄O₅Cl₂(s), or
- an additional step (c2) of contacting the antimony precipitate with a third alkaline reagent, followed by a step of drying in order to obtain antimony trioxide Sb₂O₃(s).

6. The method according to any one of claims 1 to 5, further comprising, after step (e):
- an additional step (e1) of drying the bismuth precipitate in order to obtain bismoclite BiOCI(s), or
- an additional step (e2) of contacting the antimony precipitate with a fourth alkaline reagent at a temperature between 50-80°C, followed by a step of drying in order to obtain bismuth oxide Bi₂O₃(s).

7. The method according to any one of claims 5 or 6, wherein the third and/or fourth alkaline reagent is independently selected from the group consisting of:
- a solution of NaOH/ Na₂CO₃;
- a solution of NaOH/Na₂CO₃/NaHCO₃;
- a solution of KOH/K₂CO₃/KHCO₃;
- a solution of ammonia (NH₃); and
- combinations thereof.

8. The method according to any one of claims 1 to 7, further comprising, after step (e),
- an additional step (f1) of contacting the acidic aqueous solution comprising arsenic with a ferric or ferrous salt in order to precipitate scorodite FeAsO₄(s); and
- optionally, an additional step (f2) of separating the scorodite of step (f1) from the brine comprising Cl⁻, Na⁺ and SO₄^{z-} and disposing of the brine as waste.

9. The method according to claim 8, wherein the ferric or ferrous salt is selected from the group consisting of ferric chloride, ferrous sulphate and combinations thereof.
